(19) Europäisches Patentamt
European Patent Office
Office européen des brevets

(11) **EP 3 240 695 B1**

(12) **EUROPEAN PATENT SPECIFICATION**

(45) Date of publication and mention
of the grant of the patent:
**05.02.2020 Bulletin 2020/06**

(51) Int Cl.:
***B60B 9/04*** *(2006.01)*        ***B60B 9/26*** *(2006.01)*
***B60C 7/18*** *(2006.01)*

(21) Application number: **15828809.2**

(22) Date of filing: **30.12.2015**

(86) International application number:
**PCT/US2015/068114**

(87) International publication number:
**WO 2016/109702 (07.07.2016 Gazette 2016/27)**

(54) **CROSS SPOKE NON-PNEUMATIC TIRE**

LUFTLOSER KREUZSPEICHENREIFEN

PNEU SANS AIR À RAYONS TRANSVERSAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2014 US 201462098422 P**

(43) Date of publication of application:
**08.11.2017 Bulletin 2017/45**

(73) Proprietor: **Compagnie Générale des Etablissements Michelin 63000 Clermont-Ferrand (FR)**

(72) Inventors:
• **CRON, Steven, M.**
  **Greenville, SC 29605 (US)**
• **RHYNE, Timothy, Brett**
  **Greenville, SC 29605 (US)**

(74) Representative: **Casalonga Casalonga & Partners Bayerstraße 71/73 80335 München (DE)**

(56) References cited:
EP-A1- 2 769 852          WO-A1-2006/116807
WO-A1-2010/012091       US-A- 854 699
US-A- 1 164 887          US-A1- 2014 062 170

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The subject matter of the present disclosure relates generally to tension-based non-pneumatic, structurally supported tires and wheels. More particularly, the invention relates to a tension-based non-pneumatic wheel having load supporting structural elements extending a portion of the width across the tire.

In particular, the present invention concerns a non-pneumatic tire according to the preamble of claim 1, such as it is e.g. known from EP 2 769 852 A1.

WO2010012091 (A1) describes a suspension wheel comprising a substantially rigid rim, a substantially rigid hub disposed concentrically within the rim to define an annular space between the rim and the hub, the hub being adapted for connection to an axle for the wheel, and suspension members disposed in the annular space and connected to the rim and the hub to allow the rim to move in one or both of the horizontal and vertical directions relative to the hub in response to an input to the rim.

WO2006116807 (A1) discloses a non-pneumatic wheel assembly which has an outer rim assembly, an inner vehicle hub connection member, a compartment located between the outer rim assembly and the inner hub connection member which has a plurality of spring elements wherein at least some of the spring elements are attached to the outer rim assembly and/or the inner hub connection member, characterized in that the spring elements are oriented in opposed or counteracting orientations.

US 1 164 887 A discloses a spring wheel including a hub and a rim connected by two series of curved spring spokes, the series being oppositely disposed, said hub including complementary parts each having a plurality of sockets or recesses to receive and hold the ends of the spring spokes of one series, and a washer member interposed between said complementary parts and said series of spring spokes.

US854699 A discloses a wheel comprising a rigid frame made up of complementary half sections, each section including a central body having an axle opening, spokes radiating from the body, and a rim connecting the outer ends of the spokes, fastenings connecting corresponding spokes of the two sections, a hub independent of the wheel sections, springs extending between the hub and the fastenings and means within the hub for limiting its movement.

US2014062170 (A1) discloses a non-pneumatic tire includes an inner circumferential barrier configured to be coupled to a hub, an outer circumferential barrier radially spaced from the inner circumferential barrier, and a support structure extending between the inner circumferential barrier and the outer circumferential barrier and coupling the inner circumferential barrier to the outer circumferential barrier. The support structure includes a plurality of ribs extending between the inner circumferential barrier and the outer circumferential barrier. The support structure at least partially defines a first axial side of the tire and a second axial side of the tire opposite the first axial side of the tire. The first and second axial sides of the tire define an axial width of the support structure. The axial width of the support structure varies as the support structure extends between the inner circumferential barrier and the outer circumferential barrier.

**BACKGROUND OF THE INVENTION**

The pneumatic tire is the best known solution for compliance, comfort, mass, and rolling resistance; however, the pneumatic tire has disadvantages in complexity, the need for maintenance, and susceptibility to damage. A device that improves on pneumatic tire performance could, for example, provide more compliance, better control of stiffness, lower maintenance requirements, and resistance to damage.

Conventional solid tires, spring tires, and cushion tires, although lacking the need for maintenance and the susceptibility to damage of pneumatic tires, unfortunately lack its performance advantages. In particular, solid and cushion tires typically include a solid rim surrounded by a resilient material layer. These tires rely on compression of the ground-contacting portion of the resilient layer directly under the load for load support. These types of tires can be heavy and stiff and lack the shock absorbing capability of pneumatic tires.

Spring tires typically have a rigid wood, metal or plastic ring with springs or spring like elements connecting it to a hub. While the hub is thereby suspended by the springs, the inflexible ring has only a small contact area with the road, which offers essentially no compliance, and provides poor traction and steering control.

Non pneumatic tires having a compliant outer band and connecting elements linking the outer band and hub provide improved performance over spring tires. To date, however, non-pneumatic tires lack high speed dynamic stability so as to be suitable for high speed use in vehicles such as automobiles.

A non-pneumatic, compliant wheel having performance characteristics similar to those of pneumatic tires, while improving on its disadvantages, would overcome the various deficiencies in the art and would be a welcome improvement. Particularly a non-pneumatic, compliant wheel having multiple rows of connecting members extending from a hub to a compliant outer band in opposite directions that exhibit improved high speed dynamic stability would be particularly useful.

## SUMMARY OF THE INVENTION

Aspects and advantages of the invention will be set forth in part in the following description, or may be obvious from the description, or may be learned through practice of the invention.

In particular the present application provides a non-pneumatic tire according to independent claim 1.

The dependent claims relate to advantageous embodiments.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

## BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. 1 provides a perspective view of an embodiment of the invention attached to a hub.

FIG. 2 provides a side view of an embodiment of the invention.

FIG. 3 provides a perspective view of an embodiment of the invention with a portion of the compliant outer band including a portion of the tread and outer band removed.

FIG. 4 is an exploded assembly view of the major components of an embodiment of the invention.

FIG. 5 is a close-up partial side view of an embodiment of the invention including the outer compliant outer band in an unloaded state

FIG. 6 is a close-up partial side view of an embodiment of the invention including the outer compliant outer band in a loaded state against the ground.

FIG. 7 shows a close-up view of an embodiment of a single connecting element.

FIG. 8 shows a diagrammatic figure of a finite point on a connecting element and some of the Coriolis acceleration forces as the point passes over the contact patch.

The use of identical or similar reference numerals in different figures denotes identical or similar features.

## DETAILED DESCRIPTION OF THE INVENTION

The present invention provides for a non-pneumatic tire having improved high speed performance characteristics. For purposes of describing the invention, reference now will be made in detail to embodiments and/or methods of the invention, one or more examples of which are illustrated in or with the drawings. Each example is provided by way of explanation of the invention, not limitation of the invention. In fact, it will be apparent to those skilled in the art that various modifications and variations can be made in the present invention without departing from the scope of the invention. For instance, features or steps illustrated or described as part of one embodiment, can be used with another embodiment or steps to yield a still further embodiments or methods. Thus, it is intended that the present invention covers such modifications and variations as come within the scope of the appended claims.

The following terms are defined as follows for this disclosure:

"Axial direction" or the letter "A" in the figures refers to a direction parallel to the axis of rotation of for example, the hub or the wheel as it travels along a road surface, also referred to as the "transverse" direction of the tire.

"Radial direction" or the letter "R" in the figures refers to a direction that is orthogonal to the axial direction and extends in the same direction as any radius that extends orthogonally from the axial direction.

"Equatorial plane" means a plane that passes perpendicular to the axis of rotation and bisects the hub and/or wheel structure.

"Radial plane" means a plane that passes perpendicular to the equatorial plane and through the axis of rotation of the wheel.

"Web element straight line segment" is a straight line drawn along a plane which is parallel to the equatorial plane between a point of attachment of the web element to the inner interface band and a point of attachment of the web element to the outer interface band.

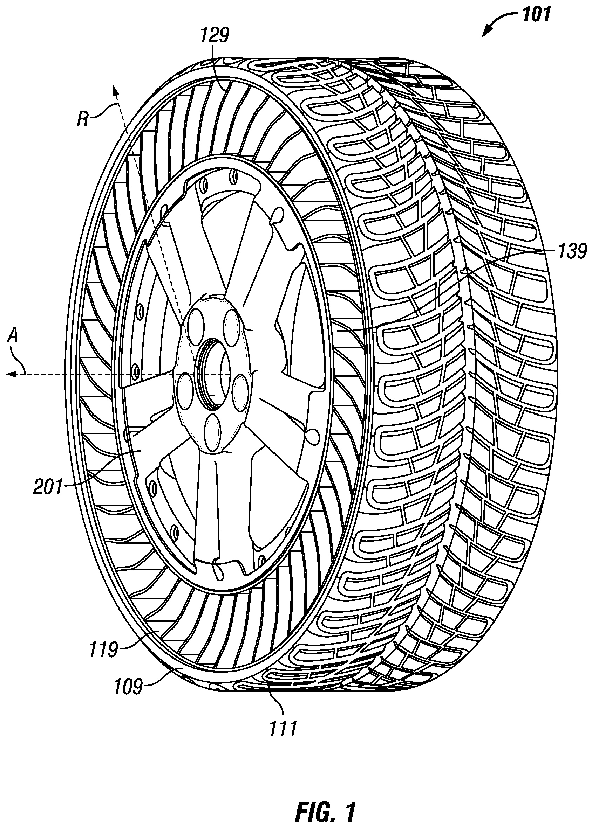

FIG. 1 provides a perspective view of a non-pneumatic wheel 101 which incorporates an embodiment of the invention. For illustration, this particular embodiment possesses a tread sculpture 111 along the outer surface of the outer band 109 which incorporates or is attached to an outer interface band 119. The outer interface band 119 is attached to an inner interface band 139 a plurality of connecting elements. The connecting elements, also referred to as "web elements" or simply "spokes," here are shown as webs extending at an angle from the outer interface band 119 to the inner interface band 139. If a radial plane is positioned to extend through the point of connection of the inner interface band 138 with a web element 119, the web element straight line segment will be positioned at an angle relative to the radial plane. The larger the angle, the larger the deradialization of the web element. A hub 201 is shown here in FIG. 1 attached to the inner interface band.

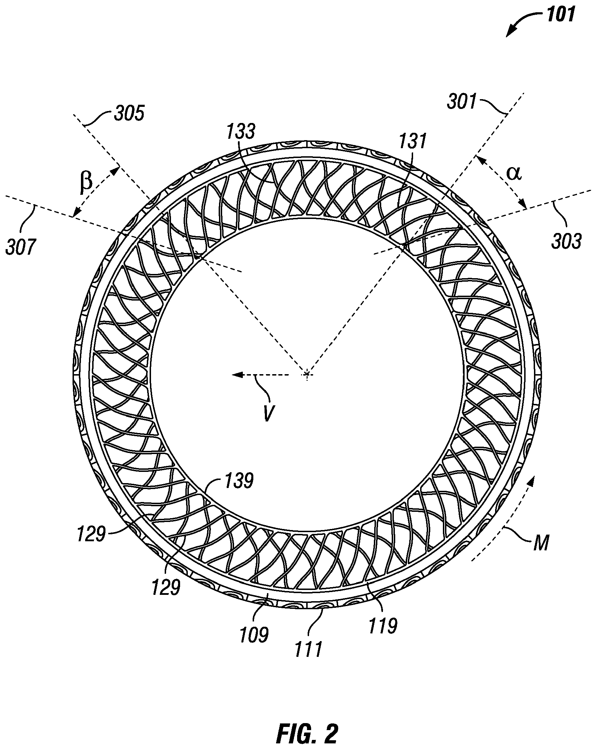

FIG. 2 provides a side view of the non-pneumatic wheel 101 of FIG. 1. Here the wheel hub is not shown. The wheel 101 possesses a plurality of connecting elements 129 connecting the outer interface band 119 to the inner interface band 139. In this particular embodiment, three rows of connecting elements 129 connect the hub to the compliant outer band 109, however, it should be understood that four rows, five rows, or another number of rows may be within the scope of the invention as well. A first row of a plurality of connecting elements 131 extending around and outward from the circumference of the inner interface band 139 are angled away from the direction of preferred rotation of the tire "M", while a plurality of a second row of connecting elements 133, positioned axially inward from the first row of connecting elements and extending around and outward from the inner interface band 139, are angled toward the direction of preferred rotation of the tire. A third row of connecting elements 135, positioned on the other side of the second row of connecting elements are angled away from the direction of the preferred rotation of the tire, however cannot be seen in FIG. 2 because their location happens to correspond in this embodiment with the first row of connecting elements 131. When referring to being angled "toward" or "away from" the direction of rotation; "toward" the direction of rotation refers to, as shown here, where the connecting element 129 extends from a point on the inner interface band 139 and connects to the outer interface band 119 at a point along the outer interface band 119 that is on the side toward the local direction of motion relative to a point along a radial plane extending through the point of attachment of the connecting element 129 to the inner interface band 139.

Other embodiments may have the connecting elements of the first and third row of a plurality of connecting elements angled toward the direction of rotation, while the connecting elements of the second row of a plurality of connecting elements are angled away from the direction of rotation. In yet another embodiment, the connecting elements of at least one row of a plurality of connecting elements are angled away from the preferred direction of rotation of the wheel, and the connecting elements of at least one other row of a plurality of connecting elements are angled toward the preferred direction of rotation of the wheel.

As used herein, the "preferred direction of rotation" is a direction of rotation of the wheel in which it is to be rotated for general high speed use. For example, on a passenger vehicle, the vehicle is generally driven forward. This would be the "preferred direction" of the vehicle, and each wheel will have a corresponding "preferred direction of rotation." The term "high speed" is used as it is generally understood in the automotive tire manufacturing industry and would include vehicles driving at speeds of 50 miles per hour or greater.

As described herein, the angle $\alpha$ of the first row of connecting elements, as measured from a radial plane 301 passing through the connection point of the element with the inner band and the web element straight line segment 303, will be said to be negative since they are angled away from the preferred direction of rotation of the tire "M", while the angle $\beta$ of the second row of connecting elements, as measured from a radial plane 305 passing through the connection point of the element with the inner band and the web element straight line segment 307, will be said to be positive since they are angled toward the direction of rotation of the tire. The angle of the third row of connecting elements in this particular embodiment is identical to the first, thus is negative. It is within the scope of the invention to have the first row angled in a positive direction, the second row in a negative direction and the third row in a positive direction. It is also within the scope of the invention, to have four rows of elements, where the first and fourth rows are negative, and the second and third rows are positive. It is also within the scope of the invention, to have four rows of elements, where the first and fourth rows are positive, and the second and third rows are negative. It is also within the scope of the invention to have a plurality of rows, where at least one row of connecting elements has a positive angle and at least one other row of connecting elements has a negative angle.

The greater number of rows of connecting elements allows for reduced lateral stiffness compared with a non-pneumatic tire of similar dimensions having a single row of connecting elements.

The angle of each connecting element within a given row may vary to some degree from element to element. For instance, within the first row, one connecting element may make an angle of +33 degrees, while connecting element immediately in front of or behind may make an angle of +35 degrees. Alternatively, all connecting elements a given row may have the same angle, say for example where the first row has all the connecting elements angled at +34 degrees. The angles of the connecting elements of the different rows of connecting elements may be different in their absolute values, or they may have shared values. For instance, the connecting elements of the second row may have an angle of -30 degrees while the connecting elements of the first and third row may have an angle of +34 degrees. Alternatively, the connecting elements of all the rows may have the same absolute angle value such as where the connecting elements of the first and third rows have an angle of -33 degrees and the connecting elements of second row has an angle of +33 degrees. The angle, as described above, of a connecting element 129 is measured when the tire is not under any loads, as the angle may change slightly when the tire is under load, and may vary depending upon its position around the tire.

Having multiple rows of connecting elements allows for the positioning of the connecting elements 129 at greater angles than what could be achieved on a wheel with a similarly sized hub and outer compliant outer band. The increased angle reduces the amount of tension the web elements undergo for a given torque by orienting the web elements closer to the direction of the rotation of the tire. The increased angle also allows for longer connecting elements to be used to connect the outer interface band and inner interface band and thus the length of the connecting elements are not limited to the radial distance between the hub and ring. Longer connecting elements reduce the connecting element's strain energy density compared to a connecting element having a shallower angle to a radial orientation. Given that fatigue cracks are driven by strain energy density and that peak spoke strain energy density in a spoke is inversely proportional to spoke length to the third power, durability is improved by longer angled spokes.

In the embodiment shown about half of the spokes increase in tension while the remaining half reduces tension when the tire is undergoing braking or deceleration forces. This reduces oscillations due to braking torque that can be generated from vertical stiffening of a non-pneumatic tire having more radially oriented connecting elements.

The multiple rows of connecting elements enable for increased torsional stiffness of the wheel which reduces contact patch movement under vehicle acceleration and deceleration. This increased torsional stiffness reduces the fore and aft movement of the contact patch when acceleration and braking forces are applied to the wheel by the vehicle. Such a reduction in contact patch movement reduces changes of the effective mechanical trail of the suspension and can improve overall vehicle handling.

The greater angle of each connecting elements enabled by having multiple rows of connecting elements with the elements of at least one row of connecting elements having a negative angle and the elements of at least one other row of connecting elements having a positive reduces the bottom loading upon the connecting elements traveling through the contact patch, reducing the ability of the connecting elements to transmit road noise.

The number of connecting members 129 in each row of connecting members may vary between the rows. For instance, in the embodiment shown, there are 58 connecting members in the first row of connecting members, 44 connecting members in the second row of connecting members, and 58 connecting members in the third row of connecting members. An alternative embodiments may have a different number of connecting elements per row than the embodiment shown here, and/or may have the same number of connecting elements in each row. Having a fewer number of connecting elements in the second row allows for greater spacing between the connecting elements.

Having a different number of spokes in different rows, the frequency associated with the passing of the spokes through the contact patch is divided into multiple harmonics, and can further reduce the energy content of each frequency relative to a single spoke passing frequency of a non-pneumatic tire having only one row of connecting members arranged transversely across the tire.

The angle of each connecting element may be chosen depending upon the characteristics desired. Preferably, however, the angle is limited by the spacing between each connecting element such that the angle and spacing chosen such that, under the normal anticipated loads for a given tire, the connecting elements do not touch or rub one another as they travel through the contact patch. While a larger angle has certain advantages, the larger the angle each connecting element makes, the less number of spokes can be placed within that particular row of spokes due to geometrical constraints which increases the portion of the total load each connecting element must carry.

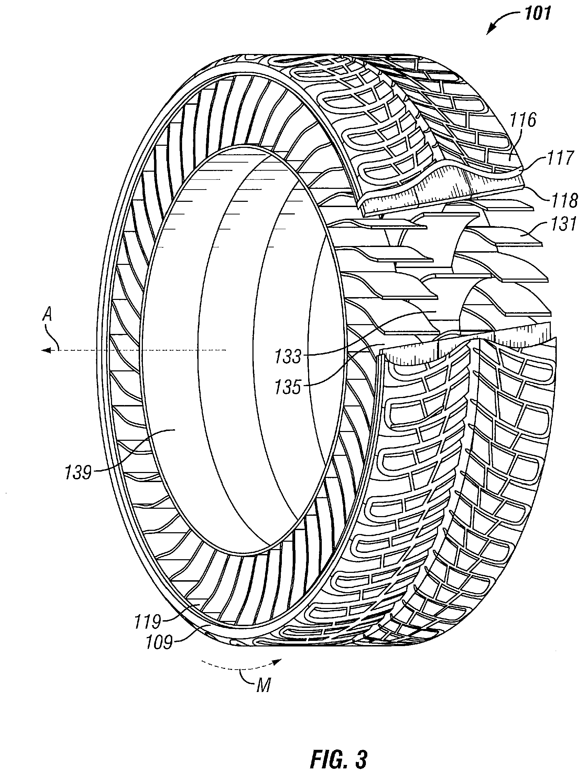

FIG. 3 shows a perspective view of an embodiment of the invention where a portion of the compliant outer band 109 (including the outer interface band) has been removed to show the first row of connecting members 131, the second row of connecting members 133 and the third row of connecting members 135. In this embodiment, the second row of connecting members have a width in the axial direction which is wider than the width of the connecting members of the first or second row of connecting members. The connecting band 109 may be comprised of a shear band 115 having a first reinforcement membrane 116 and a second reinforcement membrane 118 which are separated by a shear layer 117.

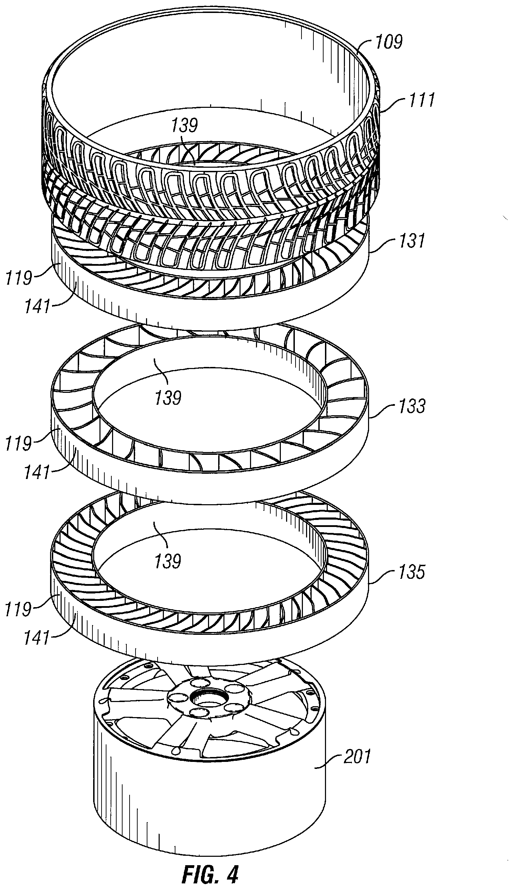

FIG. 4 shows a perspective assembly view of the compliant outer band 109, the first row of connecting elements 131, the second row of connecting elements 133, the third row of connecting elements 135, and a hub 201. When assembled radially outward surface 141 of the outer interface band 119 of each of the rows of connecting elements 131, 133, 135 is bound to the radially inner surface of the compliant outer band 109 and the radially inward surface 143 of the inner interface band 139 of each of the rows of connecting elements 131, 133, 135 is bound to the radially outer surface of the hub 201. The binding of the rows of connecting elements to the tread surface can be made by any suitable method including by using an adhesive to bind the components together.

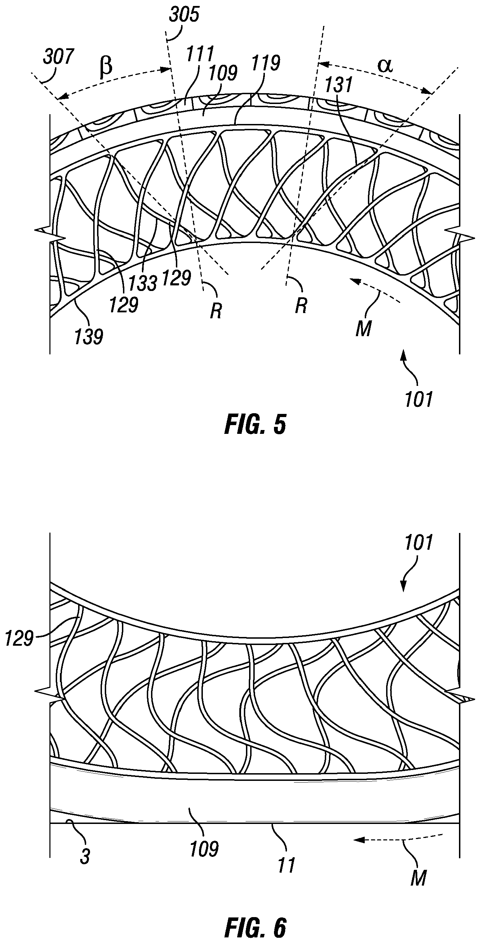

FIG. 5 shows a partial side view of the tire 101 showing the inner interface band 139, connecting elements 129, outer interface band 119, and the compliant outer band 109 and tread sculpture 111. The first row of connecting elements 131 is shown angled toward the right of the figure forming a negative angle $\alpha$ as defined above. The second row of connecting elements 133 is shown angled toward the left of the figure forming a positive angle $\beta$ as defined above. The direction of rotation, "M," is shown for the tire 101.

When a load is applied to the hub of the tire, such as when the tire is subject to the weight of the vehicle and vehicle contents and occupants, the compliant outer band 109 is pressed against and conforms to the ground surface 3 as shown in the partial view of the tire 101 in FIG 6. The outline of the area of contact is generally referred to as the contact patch 11, and may include any voids, if present, between the sculptural elements of the tread that do not contact the ground surface. The tread band is closer to the hub at the location of the contact patch and the connecting elements 129 tend to buckle and the web element straight line segments become shorter. As the tire rolls, the various connecting elements 129 pass into and out of the contact patch. The curved shape of each of the connecting elements predisposes each connecting element to buckle in a predetermined direction and manner as they pass through the contact patch. Other forces also act upon the web elements to induce or resist buckling, such as the change in angle of the compliant outer band 109 as it enters the contact patch. This change in angle causes a moment in the connecting element 129, clockwise as shown, which acts to resist buckling of the connecting element. As the speed of the tire increases, other forces become greater, in particular, it is thought that a Coriolis acceleration causes a force to act upon the connecting element as it enters the contact patch in the direction of rotation of the tire. This force acting upon the connecting element 129 as it enters the contact patch pushes the connecting element 129 to the left, as drawn, in the direction of rotation of the tire and in the opposite direction the vehicle is traveling.

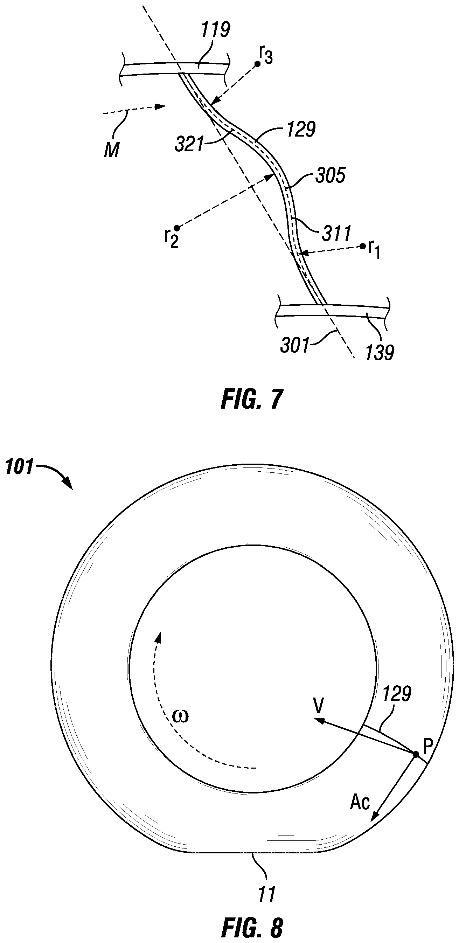

As shown in FIG 7, in the present embodiment, each connecting element possesses a first curve in a first direction having a radius $r_1$, a first inflection point 311 , a second curve in a second direction having a radius r2, a second inflection point 321, and a third curve in the first direction having a radius r3, as measured by a centerline 305 drawn through the middle of the connecting element's thickness. The combined total curvature, or predominant curvature, of the connecting element causes a majority of the connecting element's volume, and therefore also mass, to reside on one side of the connecting element's straight line segment 301. This predisposes the connecting element to buckle toward the opposite side of the straight line segment from which a majority of the connecting element's volume resides.

As the wheel rotates, the connecting elements roll in and out of the contact patch, and in buckling of each connecting element occurs as a result of the summation of forces acting upon the connecting element. Under load at relatively low speeds, say, for example 10 kilometers per hour, with a connecting element having a curvature as shown, each of the web elements buckling toward the side of the connecting element's straight line segment 301 on which there is less volume. As the speed increases other forces and moments become greater and the connecting element will buckle as a result of a sum of the forces and moments acting upon it. Each of the connecting elements of the present invention are arranged to be predisposed to buckle when moving through the contact patch in the direction that is away from the direction of rotation of the wheel. That is, the connecting elements of each row of connecting elements all possess a predominant curvature that is in the same direction, and that direction causes a lateral movement of the connecting element toward the direction of rotation of the wheel. At higher speeds, the connecting element moves toward the center of rotation of the wheel and the conservation of angular momentum induces a force directed generally in the same direction as the rotation of the wheel, reinforcing the natural buckling tendencies of the predominant curvature of the connecting element. The web elements predominant curvature in the direction away from direction of the rotation of the tire results in less noise, less vibrations, and reduced fatigue of the connecting members of the wheel.

FIG. 8 diagrammatically shows a wheel 101 and a web element 129 to explain the Coriolis acceleration upon a representative point "P" of a web element 129 as it enters the contact patch 11. Assuming point P has mass, as point P begins to enter the contact patch 11, the point experiences a velocity "V" in the rotating reference frame of the wheel 101 as shown. Assuming "V" and "$\omega$" to be vectors in the rotating reference frame of the wheel 101, then the Coriolis acceleration "Ac" in the rotating reference frame is given by the well-known expression:

$$ Ac = -2\omega \times V \qquad \text{(eqn. 1)} $$

Where the "x" denotes a vector cross product. Point P, as part of the connecting element which is attached to the wheel is restrained from accelerating in the direction of rotation by a deceleration force in the opposite direction. This deceleration force urges the web element in the direction of rotation as the web element enters the contact patch. The Corriolis acceleration has the effect of urging the buckling of the connecting element in the same direction that the predominant curvature urges the connecting element to buckle, stabilizing the web element at high speed as it enters the contact patch. At the exit of contact, point P is experiences deceleration due to the Coriolis effect and the connecting element enters back into a state of tension.

The above models the Coriolis acceleration and forces on a finite portion "P" of the connecting element at a given distance along the connecting element. It should be understood that the Coriolis effect is a result of the radial movement of the mass of the connecting element. It should be understood that the Coriolis acceleration is greater for portions of the connecting element that undergo greater radial movement, such as near the compliant outer band, and less for portions of the connecting element that undergo less radial movement, such as near the inner interface band.

While the present subject matter has been described in detail with respect to specific embodiments and methods thereof, it will be appreciated that those skilled in the art, upon attaining an understanding of the foregoing may readily produce alterations to, variations of such embodiments. Accordingly, the scope of the present disclosure is defined by the appended claims.

**Claims**

1. A non-pneumatic tire (101) comprising:

a hub (201) having a central axis (A) and a hub width extending from a first lateral side of said hub to a second lateral side of said hub;
a compliant outer band (109) positioned radially outward from said hub (201);
a plurality of connecting members (129) having an inner end connected to said hub (201) and an outer end connected to said compliant outer band (109);
a first portion of said plurality of connecting members (129) extending from said hub (201) to said compliant outer band forming a first row (131) of connecting members (129), each said inner end of said first row connecting member being attached to said hub (201) and each said outer end of each of said first row connecting member (129) being attached to said compliant outer band (109), a first straight line segment (303) passing through the connection of the first row connecting member with said hub (201) and the connection of the first row connecting member with said compliant outer band (109) forming a first angle (a) relative to the radial direction (R);
a second portion of said plurality of connecting members (129) extending from said hub (201) to said compliant outer band portion forming a second row (133) of connecting members (129), each said inner end of said second row connecting member being attached to said hub (201) and each said outer end of said second row (133) connecting member (129) being attached to said compliant outer band (109), a second straight line segment (307) passing through the connection of the second row connecting member with said hub (201) and the connection of the second row connecting member with said compliant outer band (109) forming a second angle (b) relative to the radial direction (R), wherein the first angle (a) of the connecting members (129) forming the first row (131) is measured by the angular difference between the first straight line segment (303) of the first row connecting member and a line (301) in the radial direction (R) passing through the connection point of the first row connecting member with said hub (201),
wherein said first angle (a) is said to be positive if the first straight line segment (303) is angled toward a preferred direction (M) of rotation of the tire (101), or negative if it is angled away from said preferred direction (M) of rotation of the tire (101) and wherein the second angle (b) of the connecting members (129) forming the second row (133) is measured by the angular difference between the second straight line segment (307) of the second row connecting member and a line (305) in the radial direction (R) passing through the connection point of the second row connecting member with said hub (201), wherein said second angle (b) is said to be positive if the second straight line segment (307) is angled toward a preferred direction (M) of rotation of the tire (101), or negative if it is angled away from said preferred direction (M) of rotation of the tire (101),
wherein each of said connecting members (129) of said first row (131) of connecting members possess a curvilinear shape, and each of said connecting members (129) of said second row (133) of connecting members possess a curvilinear shape,
wherein said first row (131) of connecting members is positioned laterally adjacent to said second row (133) of connecting members and said first angle (a) and said second angle (b) are in opposite directions, which means that either said first angle (a) is positive and said second angle (b) is negative or that said first angle (a) is negative and said second angle (b) is positive,
**characterized in that**
the predominant curvature of each of said curvilinear shapes of said first and second rows (131, 133) of connecting members (129) extend in the same direction, wherein the direction, of which said predominant curvature of said first and second rows (131, 133) of connecting members (129) is said to extend, is the in the direction from said first straight line segment (303) or said second straight line segment (307) of said first row connecting member or second row connecting member on which the majority of the volume and/or the majority of the mass of the first row connecting member or second row connecting member resides.

2. The non-pneumatic tire of claim 1 wherein:
said tire possesses three rows (131, 133, 135) of connecting members (129).

3. The non-pneumatic tire of claim 2 wherein:
said second connecting member row (133) is positioned axially adjacent to said first row (131) and said third row (135) of connecting members (129); each inner end of each of the third row connecting members is attached to said hub (201) and each said outer end of each of said third row connecting members is attached to said compliant outer band (109), a third straight line segment extending between said inner end and said outer end of each third row connecting member forming a third angle relative to the radial direction; wherein said third angle and said second angle (b) are in opposite directions and said first angle (a) and said third angle are in the same direction and each of said connecting members (129) of said third row (135) of connecting members possess a curvilinear shape, and the predominant curvature of each of said curvilinear shapes of said first, second and third rows (131, 133, 135) of connecting members (129) extend in the same direction.

4. The non-pneumatic tire of claim 3 wherein said connecting members (129) of said second row (133) of connecting members are wider than the connecting members (129) of said first row (131) of connecting members and said connecting members of said second row (133) of connecting members are wider than the connecting members (129) of said third row (135) of connecting members.

5. The non-pneumatic tire of any of the above claims wherein each of the connecting members (129) are only connected to said hub (201) at said inner end and to said compliant outer band (109) at said outer end.

6. The non-pneumatic tire of any of the above claims wherein said first angle (a) is negative and said second angle (b) is positive.

7. The non-pneumatic tire of any of claims 1-5 above wherein said first angle (a) is positive and said second angle (b) is negative.

8. The non-pneumatic tire of claim 1 wherein:
said tire possesses four rows of connecting members (129).

9. The non-pneumatic tire of claim 1 wherein:
said tire possesses five rows of connecting members (129).

10. The non-pneumatic tire of claim 1 wherein:
said tire possesses six rows of connecting members (129).


**Patentansprüche**

1. Luftloser Reifen (101), umfassend:

eine Nabe (201) mit einer Mittelachse (A) und einer Nabenbreite, die sich von einer ersten seitlichen Seite der Nabe zu einer zweiten seitlichen Seite der Nabe erstreckt;
ein nachgiebiges Außenband (109), das radial nach außen von der Nabe (201) aus angeordnet ist;
eine Vielzahl von Verbindungselementen (129) mit einem inneren Ende, das mit der Nabe (201) verbunden ist, und einem äußeren Ende, das mit dem nachgiebigen äußeren Band (109) verbunden ist;
einen ersten Abschnitt der Vielzahl von Verbindungselementen (129), der sich von der Nabe (201) bis zum nachgiebigen Außenband erstreckt und eine erste Reihe (131) von Verbindungselementen (129) bildet, wobei jedes innere Ende des Verbindungselements der ersten Reihe an der Nabe (201) befestigt ist und jedes äußere Ende von jedem der Verbindungselemente (129) der ersten Reihe an dem nachgiebigen Außenband (109) befestigt ist, wobei ein erstes gerades Liniensegment (303), das durch die Verbindung des Verbindungselements der ersten Reihe mit der Nabe (201) und die Verbindung des Verbindungselements der ersten Reihe mit dem nachgiebigen Außenband (109) verläuft und einen ersten Winkel (a) relativ zur radialen Richtung (R) bildet;
einen zweiten Abschnitt der Vielzahl von Verbindungselementen (129), der sich von der Nabe (201) bis zum nachgiebigen äußeren Bandabschnitt erstreckt und eine zweite Reihe (133) von Verbindungselementen (129) bildet, wobei jedes innere Ende des Verbindungselements der zweiten Reihe an der Nabe (201) befestigt ist und jedes äußere Ende des Verbindungselements (129) der zweiten Reihe (133) an dem nachgiebigen äußeren Band (109) befestigt ist, wobei ein zweites gerades Segment (307), das durch die Verbindung des Verbindungselements der zweiten Reihe mit der Nabe (201) und die Verbindung des Verbindungselements der zweiten Reihe mit dem nachgiebigen Außenband (109) verläuft und einen zweiten Winkel (b) in Bezug auf die radiale Richtung (R) bildet, wobei der erste Winkel (a) der Verbindungselemente (129), die die erste Reihe (131) bilden, durch die Winkeldifferenz zwischen dem ersten geraden Liniensegment (303) des Verbindungselements der ersten Reihe und einer Linie (301) in radialer Richtung (R) gemessen wird, die durch den Verbindungspunkt des Verbindungselements der ersten Reihe mit der Nabe (201) verläuft, wobei der erste Winkel (a) positiv ist, wenn das erste gerade Liniensegment (303) in Richtung einer bevorzugten Drehrichtung (M) des Reifens (101) abgewinkelt ist, oder negativ, wenn sie von der bevorzugten Drehrichtung (M) des Reifens (101) weg abgewinkelt ist, und wobei der zweite Winkel (b) der die zweite Reihe (133) bildenden Verbindungselemente (129) durch die Winkeldifferenz zwischen dem zweiten geraden Liniensegment (307) des Verbindungselements der zweiten Reihe und einer Linie (305) in radialer Richtung (R), die durch den Verbindungspunkt des Verbindungselements der zweiten Reihe mit der Nabe (201) verläuft, gemessen wird, wobei der zweite Winkel (b) positiv ist, wenn das zweite gerade Liniensegment (307) in Richtung einer bevorzugten Drehrichtung (M) des Reifens (101) abgewinkelt ist, oder negativ, wenn es von der bevorzugten Drehrichtung (M) des Reifens (101) abgewandt ist, wobei jedes der Verbindungselemente (129) der ersten Reihe (131) von Verbindungselementen eine kurvenförmige Form aufweist und jedes der Verbindungselemente (129) der zweiten Reihe (133) von Verbindungselementen eine kurvenförmige Form aufweist,
wobei die erste Reihe (131) von Verbindungselementen seitlich angrenzend an die zweite Reihe (133) von Verbindungselementen positioniert ist und der erste Winkel (a) und der zweite Winkel (b) in entgegengesetzte Richtungen verlaufen, was bedeutet, dass entweder der erste Winkel (a) positiv und der zweite Winkel (b) negativ ist oder dass der erste Winkel (a) negativ ist und der zweite Winkel (b) positiv ist,
**dadurch gekennzeichnet, dass**
die vorherrschende Krümmung jeder der kurvenförmigen Formen der ersten und zweiten Reihe (131, 133) von Verbindungselementen (129) sich in die gleiche Richtung erstreckt, wobei sich die Richtung, in der sich die vorherrschende Krümmung der ersten und zweiten Reihe (131, 133) von Verbindungselementen (129) erstreckt, das in der Richtung von dem ersten geraden Segment (303) oder dem zweiten geraden Segment (307) des Verbindungselements der ersten Reihe oder des Verbindungselements der zweiten Reihe ist, auf dem sich der Großteil des Volumens und/oder der größte Teil der Masse des Verbindungselements der ersten Reihe oder des Verbindungselements der zweiten Reihe befindet.

2. Luftloser Reifen nach Anspruch 1, wobei:
der Reifen drei Reihen (131, 133, 135) von Verbindungselementen (129) aufweist.

3. Luftloser Reifen nach Anspruch 2, wobei:
die zweite Verbindungselementreihe (133) axial angrenzend an die erste Reihe (131) und die dritte Reihe (135) von Verbindungselementen (129) positioniert ist; jedes innere Ende jedes der Verbindungselemente der dritten Reihe an der Nabe (201) befestigt ist und jedes äußere Ende jedes der Verbindungselemente der dritten Reihe an dem nachgiebigen Außenband (109) befestigt ist, wobei sich ein drittes gerades Liniensegment zwischen dem inneren Ende und dem äußeren Ende jedes Verbindungselements der dritten Reihe erstreckt und einen dritten Winkel in Bezug auf die radiale Richtung bildet; wobei der dritte Winkel und der zweite Winkel (b) in entgegengesetzte Richtungen verlaufen und der erste Winkel (a) und der dritte Winkel in die gleiche Richtung verlaufen und jedes der Verbindungselemente (129) der dritten Reihe (135) von Verbindungselementen eine kurvenförmige Form aufweist und die vorherrschende Krümmung jeder der kurvenförmigen Formen der ersten, zweiten und dritten Reihe (131, 133, 135) von Verbindungselementen (129) in die gleiche Richtung verläuft.

4. Luftloser Reifen nach Anspruch 3, worin die Verbindungselemente (129) der zweiten Reihe (133) von Verbindungselementen breiter sind als die Verbindungselemente (129) der ersten Reihe (131) von Verbindungselementen, und die Verbindungselemente der zweiten Reihe (133) von Verbindungselementen sind breiter als die Verbindungselemente (129) der dritten Reihe (135) von Verbindungselementen.

5. Luftloser Reifen nach einem der obigen Ansprüche, wobei jedes der Verbindungselemente (129) nur mit der Nabe (201) an dem inneren Ende und mit dem nachgiebigen äußeren Band (109) am äußeren Ende verbunden ist.

6. Luftloser Reifen nach einem der obigen Ansprüche, worin der erste Winkel (a) negativ und der zweite Winkel (b) positiv ist.

7. Luftloser Reifen nach einem der Ansprüche 1-5, worin der erste Winkel (a) positiv und der zweite Winkel (b) negativ ist.

8. Luftloser Reifen nach Anspruch 1, wobei:
der Reifen vier Reihen von Verbindungselementen (129) aufweist.

9. Luftloser Reifen nach Anspruch 1, wobei:
der Reifen fünf Reihen von Verbindungselementen (129) aufweist.

**10.** Luftloser Reifen nach Anspruch 1, wobei:
der Reifen sechs Reihen von Verbindungselementen (129) aufweist.


**Revendications**

**1.** Bandage non pneumatique (101) comprenant ;
un moyeu (201) ayant un axe central (A) et une largeur de moyeu s'étendant depuis un premier côté latéral dudit moyeu jusqu'à un second côté latéral dudit moyeu ;
une bande extérieure souple (109) positionnée radialement à l'extérieur dudit moyeu (201) ;
une pluralité d'éléments de liaison (129) ayant une extrémité intérieure reliée audit moyeu (201) et une extrémité extérieure reliée à ladite bande extérieure souple (109) ;
une première partie de ladite pluralité d'éléments de liaison (129) s'étendant depuis ledit moyeu (201) jusqu'à ladite bande extérieure souple formant une première rangée (131) d'éléments de liaison (129), chaque dite extrémité intérieure d'élément de liaison de ladite première rangée étant fixée sur ledit moyeu (201) et chaque dite extrémité extérieure de chaque élément de liaison (129) de ladite première rangée étant fixée sur ladite bande extérieure souple (109), un premier segment de ligne droite (303) passant par la liaison de l'élément de liaison de première rangée avec ledit moyeu (201) et la liaison de l'élément de liaison de première rangée avec ladite bande extérieure souple (109) formant un premier angle (a) relativement à la direction radiale (R) ;
une seconde partie de ladite pluralité d'éléments de liaison (129) s'étendant depuis ledit moyeu (201) jusqu'à ladite partie de bande extérieure souple formant une seconde rangée (133) d'éléments de liaison (129), chaque dite extrémité intérieure d'élément de liaison de ladite seconde rangée étant fixée sur ledit moyeu (201) et chaque dite extrémité extérieure d'élément de liaison (129) de ladite seconde rangée (133) étant fixée sur ladite bande extérieure souple (109), un second segment de ligne droite (307) passant par la liaison de l'élément de liaison de première rangée avec ledit moyeu (201) et la liaison de l'élément de liaison de seconde rangée avec ladite bande extérieure souple (109) formant un second angle (b) relativement à la direction radiale (R), dans lequel le premier angle (a) des éléments de liaison (129) formant la première rangée (131) est mesuré par la différence angulaire entre le premier segment de ligne droite (303) de l'élément de liaison de première rangée et une ligne (301) dans la direction radiale (R) passant par le point de liaison de l'élément de liaison de première rangée avec ledit moyeu (201), dans lequel ledit premier angle (a) est dit être positif si le premier segment de ligne droite (303) est incliné vers une direction préférée (M) de rotation du bandage (101), ou négatif s'il est incliné à l'opposé de ladite direction préférée (M) de rotation du bandage (101) et dans lequel le second angle (b) des éléments de liaison (129) formant la seconde rangée (133) est mesuré par la différence angulaire entre le second segment de ligne droite (307) de l'élément de liaison de seconde rangée et une ligne (305) dans la direction radiale (R) passant par le point de liaison de l'élément de liaison de seconde rangée avec ledit moyeu (201), dans lequel ledit second angle (b) est dit être positif si le second segment de ligne droite (307) est incliné vers une direction préférée (M) de rotation du bandage (101), ou négatif s'il est incliné à l'opposé de ladite direction préférée (M) de rotation du bandage (101),
dans lequel chacun desdits éléments de liaison (129) de ladite première rangée (131) d'éléments de liaison possède une forme curviligne, et chacun desdits éléments de liaison (129) de ladite seconde rangée (133) d'éléments de liaison possède une forme curviligne,
dans lequel ladite première rangée (131) d'éléments de liaison est positionnée latéralement adjacente à ladite seconde rangée (133) d'éléments de liaison et ledit premier angle (a) et ledit second angle (b) sont dans des directions opposées, ce qui signifie que soit ledit premier angle (a) est positif et ledit second angle (b) est négatif ou que ledit premier angle (a) est négatif et ledit second angle (b) est positif,
**caractérisé en ce que**
la courbure prédominante de chacune desdites formes curvilignes desdites première et seconde rangées (131, 133) d'éléments de liaison (129) s'étend dans la même direction, dans lequel la direction dans laquelle ladite courbure prédominante desdites première et seconde rangées (131, 133) d'éléments de liaison (129) est dite s'étendre, est la dans la direction depuis ledit premier segment de ligne droite (303) ou ledit second segment de ligne droite (307) dudit élément de liaison de première rangée ou élément de liaison de seconde rangée sur laquelle la majorité du volume et/ou la majorité de la masse de l'élément de liaison de première rangée ou l'élément de liaison de seconde rangée réside.

**2.** Bandage non pneumatique selon la revendication 1 dans lequel :
ledit bandage possède trois rangées (131, 133, 135) d'éléments de liaison (129).

**3.** Bandage non pneumatique selon la revendication 2 dans lequel :
ladite seconde rangée (133) d'éléments de liaison est positionnée axialement adjacente à ladite première rangée

**EP 3 240 695 B1**

(131) et ladite troisième rangée (135) d'éléments de liaison (129) ; chaque extrémité intérieure de chacun des éléments de liaison de troisième rangée est fixée sur ledit moyeu (201) et chaque dite extrémité extérieure de chacun desdits éléments de liaison de troisième rangée est fixée sur ladite bande extérieure souple (109), un troisième segment de ligne droite s'étendant entre ladite extrémité intérieure et ladite extrémité extérieure de chaque élément de liaison de troisième rangée formant un troisième angle relativement à la direction radiale ; dans lequel ledit troisième angle et ledit second angle (b) sont dans des directions opposées et ledit premier angle (a) et ledit troisième angle sont dans la même direction et chacun desdits éléments de liaison (129) de ladite troisième rangée (135) d'éléments de liaison possède une forme curviligne, et la courbure prédominante de chacune desdites formes curvilignes desdites première, seconde et troisième rangées (131, 133, 135) d'éléments de liaison (129) s'étendent dans la même direction.

4. Bandage non pneumatique selon la revendication 3 dans lequel lesdits éléments de liaison (129) de ladite seconde rangée (133) d'éléments de liaison sont plus larges que les éléments de liaison (129) de ladite première rangée (131) d'éléments de liaison et lesdits éléments de liaison de ladite seconde rangée (133) d'éléments de liaison sont plus larges que les éléments de liaison (129) de ladite troisième rangée (135) d'éléments de liaison.

5. Bandage non pneumatique selon l'une quelconque des revendications précédentes dans lequel chacun des éléments de liaison (129) sont seulement liés audit moyeu (201) au niveau de ladite extrémité intérieure et à ladite bande extérieure souple (109) au niveau de ladite extrémité extérieure.

6. Bandage non pneumatique selon l'une quelconque des revendications précédentes dans lequel ledit premier angle (a) est négatif et ledit second angle (b) est positif.

7. Bandage non pneumatique selon l'une quelconque des revendications précédentes 1-5 dans lequel ledit premier angle (a) est positif et ledit second angle (b) est négatif.

8. Bandage non pneumatique selon la revendication 1 dans lequel :
ledit bandage possède quatre rangées d'éléments de liaison (129).

9. Bandage non pneumatique selon la revendication 1 dans lequel :
ledit bandage possède cinq rangées d'éléments de liaison (129).

10. Bandage non pneumatique selon la revendication 1 dans lequel :
ledit bandage possède six rangées d'éléments de liaison (129).

**FIG. 1**

**FIG. 2**

**FIG. 3**

**FIG. 4**

FIG. 5

FIG. 6

**FIG. 7**

**FIG. 8**

**EP 3 240 695 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2769852 A1
- WO 2010012091 A1
- WO 2006116807 A1
- US 1164887 A
- US 854699 A
- US 2014062170 A1